# EUROPEAN PATENT APPLICATION

(11) **EP 3 263 206 A1**
(43) Date of publication of application: **03.01.2018**
(21) Application number: 17178384.8
(22) Date of filing: 28.06.2017
(51) Int. Cl.: B01D 35/147, B01D 29/11, B01D 29/68

(54) **SELF-CLEANING FILTER**

(30) Priority: 28.06.2016 IT UA20164711
(71) Applicant: Gogreeen S.a.s. di Rossi Maurizio, 16121 Genova (GE) (IT)
(72) Inventor: Cendron, Nicola, 16121 Genova GE (IT); Rossi, Maurizio, 16121 Genova GE (IT); Storari, Renato, 16121 Genova GE (IT)
(74) Representative: Perani & Partners S.p.A.

(57) **Abstract**

A filter structure is herein disclosed, which comprises a purification chamber having an inlet for a flow to be treated, and an outlet for a purified flow. A filter cartridge is placed in the purification chamber to retain sold residues. A cleaning unit is operably associated with the filter cartridge for cleaning the cartridge from the retained solids. The cleaning unit comprises at least one scraping member, a motor unit with a drive shaft operably connected to the scraping member, such that the scraping member so actuated selectively reciprocates along the cartridge. The inlet and the outlet are arranged coaxially with respect to a longitudinal axis that passes through the purification chamber. Particularly, the drive shaft of the motor unit is coaxial with the filter unit, first and second duct portions branch off the inlet and are substantially parallel to each other and connected in fluid communication with the purification chamber. The motor unit is placed between the first and second duct portions. Thus, the filter structure incorporates the motor unit coaxial with the longitudinal axis of the filter in a small space.

## Description

The present invention relates to a self-cleaning filter structure, particularly of a filter for retaining suspended solids and other elements in water.

Self-cleaning filters are known which are designed to purify water from solid residues and other particles. According to their operating principle, the water to be treated enters the filter unit through an inlet, flows through a filter element, i.e. a cartridge, that retains the suspended solids, and exits after being so treated through an outlet. The filter is of self-cleaning type when it is equipped with a cleaning mechanism that ensures purging of the retained solids toward a purge port.

According to the position of the inlet and outlet for the flow, in-line filters are identified, in which the inlet and outlet are substantially coaxial with respect to a vertical axis.

These and other types are used for treating water in purification systems mounted aboard boats or ships, and are adapted for high flow-rate treatment, in certain cases with a continuous operation.

In this type of marine installation the need arises to minimize dimensions and facilitate replacement of the filter cartridge when required.

In common practice, these filters are associated with other devices that form the filter system, such as by-pass valves. The purpose of these valves is to by-pass the filter, if needed, without stopping the process upstream from the filter. This will allow maintenance to be performed on the automatic filter regeneration system as well as replacement or thorough cleaning of the filter element at a later time.

### SUMMARY OF THE INVENTION

The object of the present invention is to provide a self-cleaning filter structure that has minimized dimensions with the same fluid treatment flow rate.

Another object of the present invention is to provide a self-cleaning filter structure that can easily and quickly perform maintenance on or replacement of the filter cartridge.

A further object of the present invention is to provide a self-cleaning filter structure that has a simple construction and low manufacturing costs.

These and other objects are fulfilled by a self-cleaning filter structure that comprises:
- a filter unit comprising:
   a purification chamber having an inlet for a flow to be treated, and an outlet for a purified flow;
   a filter cartridge disposed in said purification chamber and adapted to retain solid residues from said flow to be treated to purify it and obtain said purified flow;
- a cleaning unit operably associated with said filter cartridge and adapted to clean said cartridge from the retained solids; wherein
   said cleaning unit comprises:
   at least one scraping member,
   a motor unit having a drive shaft operably connected to said scraping member, such that said scraping member actuated by said motor unit will selectively reciprocate along said cartridge;
   wherein said inlet and said outlet are arranged coaxially with respect to a longitudinal axis that passes through said purification chamber, and
   characterized in that:
   said drive shaft of said motor unit is arranged coaxial with said filter unit;
   first and second duct portions branch off said inlet, and are substantially parallel to each other and connected in fluid communication to said purification chamber,
   said motor unit is placed between said first and second duct portions.

Thus, the filter structure incorporates the motor unit coaxial with the longitudinal axis of the filter in a small space. The motor unit is disposed between the first and second duct portions. The latter form a branch that extends from the inlet and connects to the purification chamber. The branch can define a space for accommodating the motor unit.

Thus, the configuration of the present invention, with the motor unit situated in line with the purification chamber and the inlet and outlet can reduce the dimensions of the filter, which holds all the parts in coaxial arrangement.

Advantageously, said first and second duct portions comprise a filter part.

Particularly, said filter part is inclined to the horizontal axis of said first or second duct portions.

Advantageously, a bypass valve unit is provided, which is removably connected upstream from said purification chamber.

Particularly, said bypass valve unit comprises a valve body removably connected downstream from said first and second duct portions of said inlet. Thus, the structure also incorporates the bypass valve unit which, in classical systems, is an additional part operably associated with the filter.

Particularly, said valve body comprises a plurality of openings, each of said openings being operably associated with a piston which is adapted to selectively close/open the corresponding opening.

Particularly, said openings are radially arranged around said valve body and particularly four equally spaced openings are provided.

The aforementioned pistons are controlled by a control unit.

Advantageously, a pressure sensor is operably associated with said bypass valve unit, and is associated with the control unit.

Once a pressure threshold is reached, or by manual control, said pneumatic pistons are selectively actuated to sequentially open the openings, according to settings that have been pre-determined by the control unit, for excess water to directly flow out of said outlet.

### LIST OF DRAWINGS

Further features and/or advantages of the present invention will appear more clearly from the following description of one embodiment, which is given by way of example and without limitation with reference to the annexed drawings, wherein:
- Figure 1 shows a perspective view of a self-cleaning filter structure of the present invention;
- Figure 2 shows a side view of the self-cleaning filter structure of Figure 1;
- Figure 3 shows a top view of the self-cleaning filter structure of Figure 2;
- Figure 4 shows a lateral sectional view of the self-cleaning filter structure of Figure 1;
- Figure 5 shows a perspective view of a detail of the filter of Figure 1 according to the second embodiment, with certain parts omitted to better show other parts;
- Figure 6a shows a top view of the detail of Figure 5 in a first operating configuration;
- Figure 6b shows a top view of the detail of Figure 5 in a second operating configuration.

### DETAILED DESCRIPTION

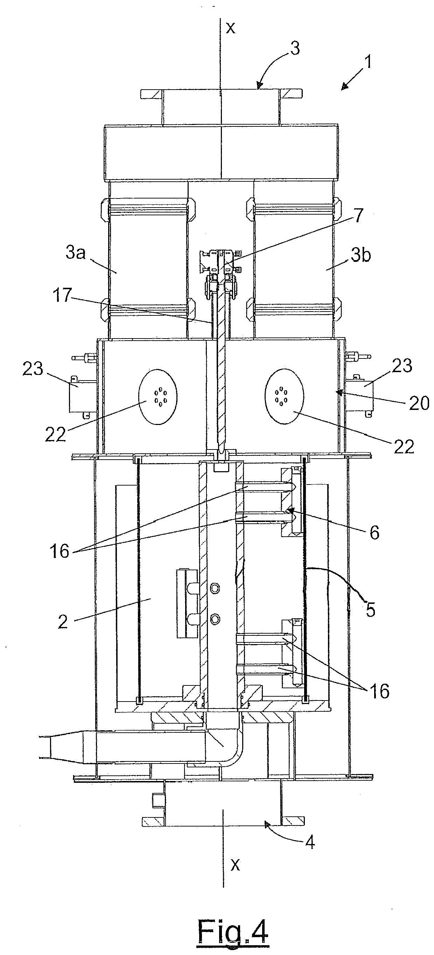

Referring to cleaning the filter structure 1 is shown which comprises a filter unit 10 having a purification chamber 2, with an inlet 3 for a flow to be treated and an outlet 4 for the purified flow. As shown in Figure 4, the purification chamber 2 has a filter cartridge 5 fitted therein, which is designed to retain solid residues from the flow to be treated to purify it and obtain the purified flow. A cleaning unit 6 is operably associated with the filter cartridge 5 and has the purpose of cleaning the cartridge from the retained solids.

More particularly, still as shown in Figure 4, the cleaning unit comprises at least one scraping member 16, particularly multiple scraping members 16, operably connected to a motor unit 7, which in turn comprises a drive shaft 17 operably connected to the scraping members 16. According to the operating principle, the scraping members 16 are actuated by the motor unit 7 which selectively reciprocates them along the cartridge. The reciprocating motion is particularly the combination of a rotational motion about the axis of the cartridge 5 and a translational motion along the axis of the cartridge 5.

In terms of construction, the inlet 3 and the outlet 4 are coaxial with a longitudinal X-X that extends through the purification chamber 2. In the filter structure of the present invention, the drive shaft 17 of the motor unit 7 is coaxial with the filter unit 10. This is possible because the inlet 3 has first 3a and second 3b duct portions branching therefrom, substantially parallel to each other and connected in fluid communication to the purification chamber 2. The motor unit 7 is placed between the first 3a and second 3b duct portions.

Thus, the filter structure 1 incorporates the motor unit 7 coaxial with the longitudinal axis X-X of the filter in a small space. The motor unit 7 is mounted in line between the first 3aand second 3b duct portions. The latter form a two-way branch that extends from the inlet 3 and connects to the purification chamber 2. The branch can define a space 18 for accommodating the motor unit 7.

Furthermore, the configuration of the present invention, with the motor unit 7 situated in line with the purification chamber 2 and the inlet 3 and outlet 4 can reduce the dimensions of the filter, which holds all the parts in coaxial arrangement.

Particularly, the first and second duct portions comprise a filter part, i.e. a stationary, non-self-cleaning prefilter consisting of a perforated metal sheet whose free net flow section is substantially larger than the flow section of each duct. Particularly, the prefilter is inclined to the horizontal axis of the duct portions.

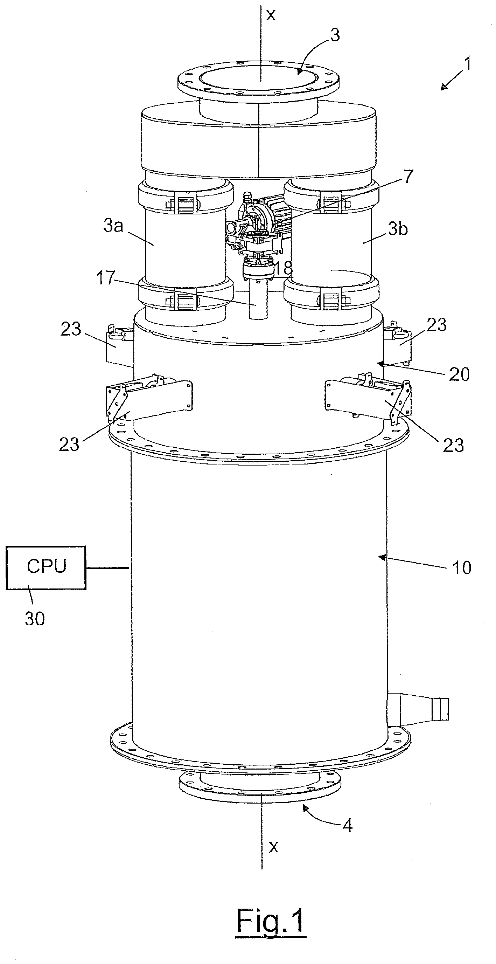

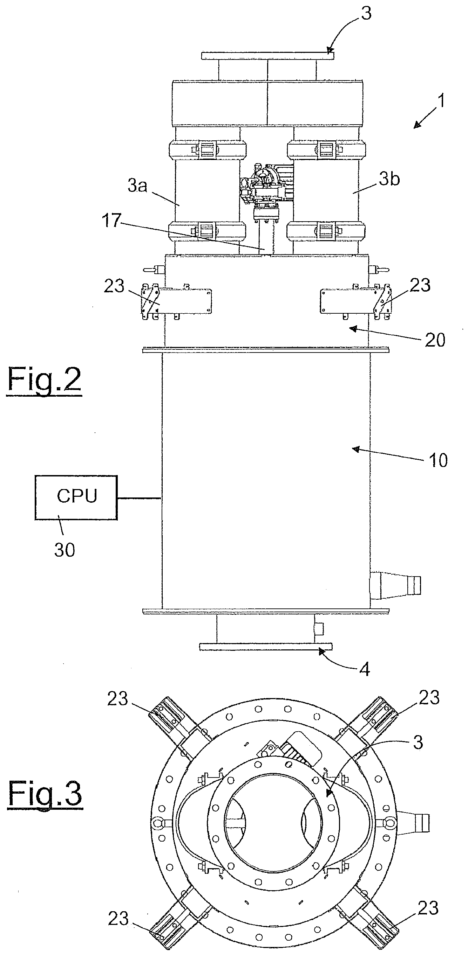

In a preferred embodiment, as shown in Figures 1 to 4, the valve structure of the present invention advantageously incorporates a bypass valve unit 10 which is removably connected upstream from the purification chamber 2.

Particularly, the bypass valve unit 20 comprises a valve body 21, particularly a cylindrical portion coaxially abutting the top of the purification chamber 2 and connected downstream, i.e. below the first 3a and second 3b duct portions of the inlet 3. Thus, the valve structure also incorporates the bypass valve unit 20 which, in classical systems, is an additional part operably associated with the filter.

Particularly, the valve body 21 comprises a plurality of openings 22 (see Fig. 4), each of the openings being operably associated with a piston 23 which is adapted to selectively close/open the corresponding opening 22.

Particularly, the openings 22 are radially arranged around the valve body 21 and particularly four equally spaced openings 22 are provided. The pistons are controlled by a control unit or by a manual drive.

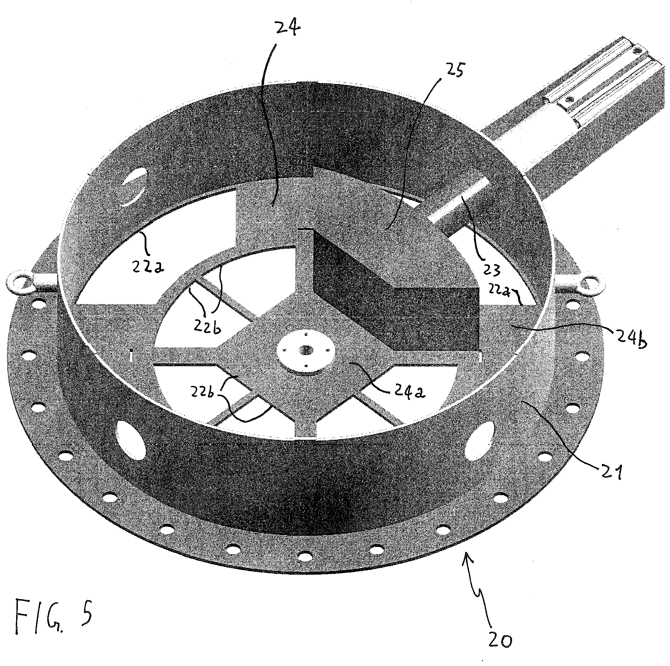

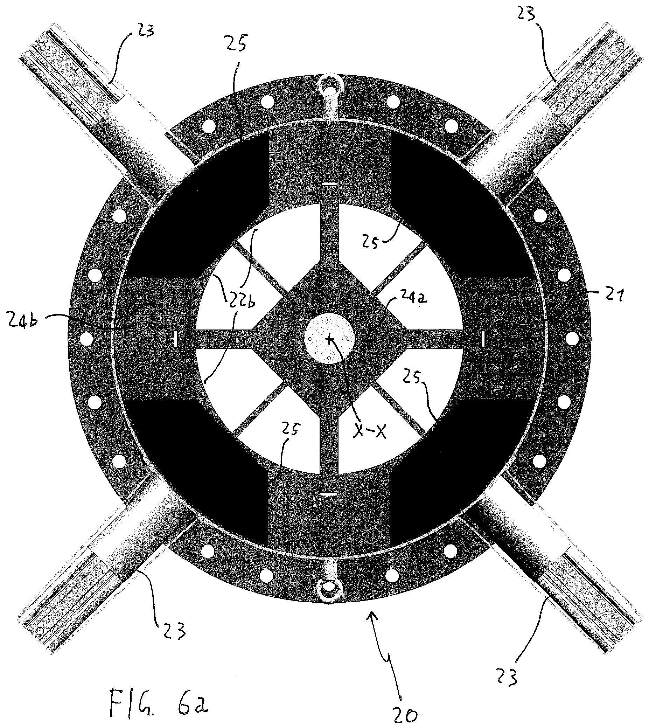

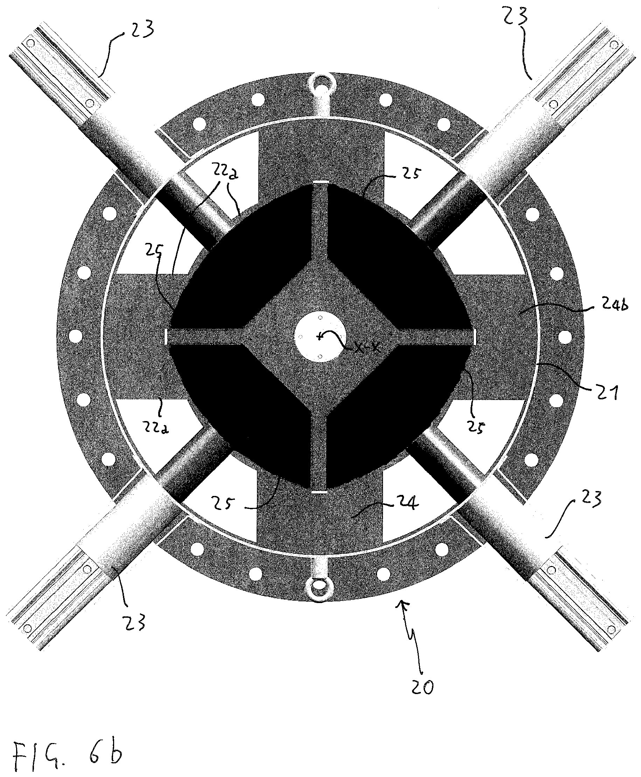

According to a particularly advantageous embodiment of the invention, as shown in Figures 5, 6a and 6b, the valve body 21 comprises a base plate 24. Such base plate 24 is substantially flat, preferably has a circular shape and defines a base of the valve body 21, particularly the lower base. Furthermore, the base plate 24 at least partially delimits the purification chamber 2.

More in detail, it shall be noted that the base plate 24 has an inner zone 24a, located proximal to the aforementioned longitudinal axis X-X and an outer zone 24b, located in a radially spaced position relative to the longitudinal axis X-X.

Particularly referring to Figure 5, it shall be noted that the base plate 24 has a set of first openings 22a and a set of second openings 22b. These openings 22a, 22b are preferably coplanar.

Particularly, the second openings 22b are located at the aforementioned inner zone 24a. Likewise, the first openings 22a are located at the aforementioned outer zone 24b.

It shall be noted that, as a result of this arrangement, the second openings 22b are in fluid communication with the purification chamber 2 upstream from the filter cartridge 5. Likewise, the first openings 22a are in fluid communication with the purification chamber 2 downstream from the filter cartridge 5.

More in detail, each opening 22a,22b is substantially sector-shaped. In further detail, each opening 22a, 22b has an angular width of 90°.

It shall be noted that, in terms of construction, each opening 22a, 22b may be defined by two or more subopenings. Nevertheless, according to the present disclosure, operably associated subopenings will be considered as a single opening 22a, 22b.

More in detail, each opening 22a has a respective second opening 22b corresponding thereto.

Particularly referring to figure 5, it shall be noted that the aforementioned piston 23 comprises a head 25, which is configured to alternately overlap a first opening 22a or second opening 22b respectively. Particularly, the head 25 is sector-shaped and is slightly larger than the openings 22a, 22b, such that it may cover them completely. Such head 25 is radially movable in the valve body 21.

More in detail, it shall be noted that the piston 23 is radially reversibly movable from a first position to a second position. In the first position, the head 25 blocks a first opening 22a. In the second position, the head 25 blocks a respective second opening 22b.

As shown in Figures 6a and 6b, the bypass valve unit 20 is adapted to be switched between a filter configuration and a bypass configuration. In the filter configuration, as shown in Figure 6a, all the pistons 23 are in the first position. This, the flow to be treated flows through the second openings 22b and the filter cartridge 5. In the bypass configuration, as shown in Figure 6b, all the pistons 23 are in the second position, such that the flow to be treated is caused to bypass the filter cartridge and flow into the purification chamber 2.

In a preferred embodiment, two pressure sensors are operably associated with the by-pass valve unit 20 and are further associated with the control unit, which can automatically actuate the bypass valves to the open position, when a pressure threshold is reached by any of the sensors, so that excess water may directly flow out of the outlet 4.

In other construction aspects, the filter structure of the present invention has further components, such as pressure gages, the aforementioned pressure sensors, pneumatic discharge valves. The control unit, not shown in detail, can ensure automation of the operating states of the filter, including the washing step and the actuation of the scraping members 16.

This filter structure affords a number of advantages. A first advantage is size reduction, due to the arrangement of the motor unit in line with the inlet and the outlet. A further advantage is the possibility of replacing the filter cartridge. Indeed, by simply removing the upper portion of the filter, i.e. the two-way connector and the bypass valve, if any, the purification chamber 2 may be accessed, and maintenance and/or replacement of the cartridge 5 may be performed.

## Claims

1. A self-cleaning filter structure (1), which comprises:
- a filter unit comprising:
a purification chamber (2) having an inlet (3) for a flow to be treated, and an outlet (4) for a purified flow;
a filter cartridge (5) disposed in said purification chamber (2) and adapted to retain solid residues from said flow to be treated to purify it and obtain said purified flow;
- a cleaning unit (6) operably associated with said filter cartridge (5) and adapted to clean said cartridge from the retained solids; wherein said cleaning unit (6) comprises:
at least one scraping member (16),
a motor unit (7) having a drive shaft (17) operably connected to said scraping member (16), such that said scraping member (16) actuated by said motor unit (7) will selectively reciprocate along said cartridge;
wherein said inlet (3) and said outlet (4) are arranged coaxially with respect to a longitudinal axis X-X that passes through said purification chamber (2), and
**characterized in that**:
- said drive shaft (17) of said motor unit (7) is arranged coaxially with said filter unit,
- a first (3a) and a second (3b) duct portions branch off said inlet (3), and are substantially parallel to each other and connected in fluid communication to said purification chamber (2),
- said motor unit (7) is placed between said first (3a) and second (3b) duct portions.

2. A self-cleaning filter structure (1) as claimed in claim 1, wherein a bypass valve unit (20) is removably connected upstream from said purification chamber (2).

3. A self-cleaning filter structure (1) as claimed in claim 2, wherein said bypass valve unit (20) comprises a valve body (21) removably connected downstream from said first (3a) and second (3b) duct portions of said inlet (3).

4. A self-cleaning filter structure (1) as claimed in claim 3, wherein said valve body (21) comprises a plurality of openings (22), each of said openings (22, 22a, 22b) being operably associated with a piston (23) which is adapted to selectively close/open the corresponding opening.

5. A self-cleaning filter structure (1) as claimed in claim 4, wherein said openings (22) are radially arranged around said valve body (21), and particularly four equally spaced openings are provided.

6. A filter structure (1) as claimed in claim 4, **characterized in that** said valve body (21) comprises a base plate (24), said openings (22a, 22b) being formed on said base plate (24).

7. A filter structure (1) as claimed in the preceding claim, **characterized in that** each of said openings (22a, 22b) is substantially shaped as a sector of a circle.

8. A filter structure (1) as claimed in the preceding claim, **characterized in that** each of said openings (22a, 22b) has an angular width of 90°.

9. A filter structure (1) as claimed in any of claims 6 to 8, **characterized in that** said base plate (24) has an inner zone (24a) located proximal to said longitudinal axis (X-X) and an outer zone (24b) located in a radially spaced position relative to said longitudinal axis (X-X), said base plate (24) having a set of first openings (22a) located at said outer zone (24b) and a set of second openings (22b) located at said inner zone (24a), said first openings (22a) being in fluid communication with said purification chamber (2) downstream from said filter cartridge (5), said second openings (22b) being in fluid communication with said purification chamber (2) upstream from said filter cartridge (5).

10. A filter structure (1) as claimed in the preceding claim, **characterized in that** said piston (23) comprises a head (25) which is configured to alternately overlap a first opening (22a) or a second opening (22b) respectively.

11. A filter structure (1) as claimed in the preceding claim, **characterized in that** said piston (23) is radially reversibly movable from a first position in which said head (25) blocks a respective first opening (22a) to a second position in which said head (25) blocks a respective second opening (22b).

12. A filter structure (1) as claimed in the preceding claim, **characterized in that** said bypass valve unit (20) can be switched between a filter configuration in which all the pistons (23) are in the first position to cause the flow to be treated to flow through said second openings (22b) and said filter cartridge (5) and a bypass configuration in which all the pistons (23) are in the second position, to cause the flow to be treated to bypass said filter cartridge (5) and flow into the purification chamber (2).

13. A self-cleaning filter structure (1) as claimed in any of the preceding claims, wherein said pistons are controlled by a control unit.

14. A self-cleaning filter structure (1) as claimed in the preceding claim, wherein two pressure sensors are operably associated with said bypass valve (20) and are associated with said control unit such that, once a pressure threshold is reached, said pistons are actuated to open said openings (22) and allow excess water to directly flow out of said outlet (4).
